# EUROPEAN PATENT APPLICATION

(11) **EP 4 723 611 A1**
(43) Date of publication of application: **08.04.2026**
(21) Application number: 25201466.7
(22) Date of filing: 10.09.2025
(51) Int. Cl.: H04N 1/32

(54) **IMAGE READING DEVICE AND INFORMATION PROCESSING METHOD**

(30) Priority: 01.10.2024 JP 2024172709
(71) Applicant: Toshiba TEC Kabushiki Kaisha, Tokyo 141-8562 (JP)
(72) Inventor: Yamashita, Daisuke, Tokyo, 141-8562 (JP); Akiyama, Atsushi, Tokyo, 141-8562 (JP); Narahashi, Masaki, Tokyo, 141-8562 (JP); Kinoshita, Hiroki, Tokyo, 141-8562 (JP)
(74) Representative: Bandpay & Greuter

(57) **Abstract**

According to one embodiment, an image reading device, such as a document scanner or the like, includes a scanner unit configured to provide an image of a document and a control unit. The control unit is configured to recognize name information in the image provided by the scanner unit and acquire information indicating a destination for the image associated with the recognized name information. The control unit then transmits the image to the destination based on the information indicating the destination. For example, the destination may be one or more email addresses or a shared file folder or the like.

## Description

### FIELD

Embodiments described herein relate generally to an image reading device and an information processing method.

### BACKGROUND

In the related arts, a technology in which an image forming device transmits image data that has been scanned by a user to a preset destination is known. Examples of the destination to which data may be transmitted include a folder on a file server and an email address of the user or another. The user generally sets a destination for the data transmission on an operation panel of the image forming device. For example, the user directly inputs a path to a folder on the file server or an email address via the operation panel or selects a path or an email address that has been registered in advance.

However, in the technology of the related art, the user is required to operate the operation panel every time the user sets the destination for data transmission, which is troublesome to the user.

### DISCLOSURE OF THE INVENTION

To this end, an image reading device and a method for reading an image according to appended claims are provided.

### BRIEF DESCRIPTION OF THE DRAWINGS

FIG. 1 is a block diagram schematically illustrating a data transmission system according to an embodiment.
FIG. 2 is a block diagram of an image reading device.
FIG. 3 is a flowchart of information processing by an image reading device.
FIG. 4 is a diagram illustrating an example of a document.
FIG. 5 is a diagram illustrating an example of a destination display image displayed on an image reading device.
FIG. 6 is a diagram illustrating another example of a document.
FIG. 7 is a diagram illustrating another example of a destination display image displayed on an image reading device.
FIG. 8 is a flowchart of information processing by an image reading device.
FIG. 9 is a diagram illustrating an example of a document according to a modification of the embodiment.
FIG. 10 is a diagram illustrating an example of a destination display image displayed on an image reading device.

### DETAILED DESCRIPTION

The object of the embodiment of the disclosure is to provide a technology that facilitates data transmission and provides an improvement over the related art associated with electronic document scanning or the like.

In general, according to one embodiment, an image reading device includes a control unit and a scanner unit configured to provide an image of a document. The control unit is configured to recognize name information in the image provided by the scanner unit, acquire information indicating a destination for the image associated with the recognized name information, and transmit the image to the destination based on the information indicating the destination.

Hereinafter, the embodiment is described with respect to the drawings. In each drawing, the same components are denoted by the same reference numerals as needed, and repeated explanation is omitted.

### (Configuration Example)

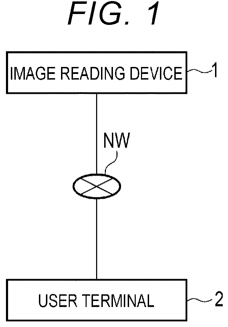

FIG. 1 is a block diagram illustrating an example of a data transmission system S according to the embodiment.

The data transmission system S includes an image reading device 1 and a user terminal 2. The image reading device 1 and the user terminal 2 are communicably connected to each other via a network NW. The network NW can be any one or combination of the Internet, a mobile network, and a local area network (LAN). The network may include a wireless network or may include a wired network. The data transmission system S is a system that transmits image data read by the image reading device 1 to the user terminal 2. The data transmission system S may include a plurality of image reading devices 1. The data transmission system S may include a plurality of user terminals 2. The data transmission system S includes at least two electronic devices that interact.

The image reading device 1 is an electronic device having an electrophotographic printing function. The image reading device 1 in this example is a multifunction peripheral (MFP) having a copy function, a print function, a facsimile function, a scanner function, and the like. The image reading device 1 is one example of a reading device. A configuration example of the image reading device 1 is described below.

The user terminal 2 is an electronic device that can communicate with other electronic devices. The user terminal 2 is, for example, an electronic device owned by a user. For example, the user terminal 2 is a personal computer (PC), a smartphone, a tablet terminal, or the like. The user terminal 2 receives data such as image data transmitted from the image reading device 1. The user may be referred to as a client, a customer, or a person in certain contexts.

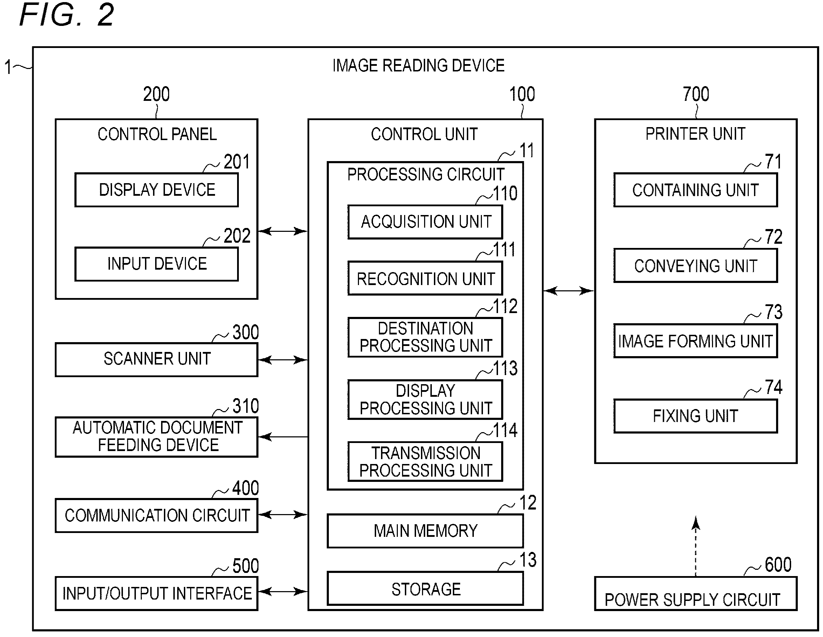

FIG. 2 is a block diagram schematically illustrating the configuration example of the image reading device 1 according to the embodiment. The image reading device 1 has an optical character recognition (OCR) function that performs character recognition on an acquired image.

The image reading device 1 includes a control unit 100, a control panel 200, a scanner unit 300, an automatic document feeding device 310, a communication circuit 400, an input/output interface 500, a power supply circuit 600, and a printer unit 700.

The control unit 100 controls various operations of each unit of the image reading device 1. The control unit 100 includes a processing circuit 11, a main memory 12, and a storage 13.

The processing circuit 11 corresponds to a central portion of the image reading device 1. The processing circuit 11 includes one or more circuits that execute a plurality of processing by a plurality of functions. For example, the circuit is a processor, an application specific integrated circuit (ASIC) or a field-programmable gate array (FPGA), but the circuit is not limited thereto. For example, the processor is a central processing unit (CPU) or a graphics processing unit (GPU), but the processor is not limited thereto. The processing circuit 11 loads a program stored in the main memory 12 or the storage 13 onto the main memory 12. The program provides software instructions that can cause the processing circuit 11 to execute various processing. The processing circuit 11 can execute various processing by executing the program loaded onto the main memory 12.

The main memory 12 includes a nonvolatile memory area and a volatile memory area. The main memory 12 stores an operating system or a program in the nonvolatile memory area. The main memory 12 uses the volatile memory area as a work area in which data can be appropriately rewritten by the processing circuit 11. For example, the main memory 12 includes a read only memory (ROM) as the nonvolatile memory area. For example, the main memory 12 includes a random access memory (RAM) as the volatile memory area.

The storage 13 corresponds to an auxiliary storage unit of the image reading device 1. For example, the storage 13 includes a hard disk drive (HDD). The storage 13 may include a semiconductor storage medium such as a solid-state drive (SSD) in addition to HDD. The storage 13 stores the above-mentioned program, data used when the processing circuit 11 performs various processing, and data generated by the processing of the processing circuit 11. The storage 13 can store image data generated by the scanner unit 300. The storage 13 is an example of a memory.

The storage 13 stores destination information. The destination information indicates, for example, a destination linked to a destination name. The destination name can be, for example, a name or a title of a person to whom the scanned information is to be sent. The destination name may be a user name, a nickname, or the like of a user. The person or the like who is the destination may also be referred to as the destination user. The destination name is an example of name information. The information indicating the destination is information representing the data transmission destination or path for the destination user. The information indicting the destination can be, for example, an email address or folder information. The email address can be an email address of a destination user. The email address of a destination user is also referred to as a destination address. The folder information indicates a file folder or the like for a destination user. The folder information of a destination user includes a path by which the folder is accessible by the destination user. A folder accessible by the destination user is also referred to as a destination folder. The destination folder may be, for example, a folder in the user terminal 2. The destination folder may be a folder on a file server. The path of the destination folder is also referred to as a destination folder path. The information representing a destination includes at least one of a destination address or a destination folder path.

The destination name is linked to information representing at least one destination. The destination name may be linked to information representing a plurality of destinations of different types or otherwise. The destination name may be linked to at least one of a destination address or a destination folder path. The destination name may be linked to both a destination address and a destination folder path. The destination name may be linked to a plurality of destination addresses. The destination name may be linked to a plurality of destination folder paths. For example, the destination name "AAA" may be linked to a destination address "aaa_aaa@abcde.co.jp". The destination name "AAA" may also be linked to a destination folder path "¥¥ABC¥aaa". The destination name "AAA" may be linked to both the destination address "aaa_aaa@abcde.co.jp" and the destination folder path "¥¥ABC¥aaa". The destination information may be appropriately set or updated by a user, an administrator, or the like of the image reading device 1.

The storage 13 stores registration information. The registration information is, for example, information in which a destination item and information specifying a destination are linked. The destination item is a predetermined character string or a predetermined image that has been set by the user to indicate the presence of a destination. The predetermined character string is, for example, a character string including a name, a nickname, a pronoun, and the like. For example, the predetermined character string is "TO ME", "To myself", or "Superior". The predetermined image is, for example, an image including a signature, a seal, a stamp image, or the like. The information specifying the destination can be any information that can identify the destination. The information specifying a destination includes, for example, a client of the image reading device 1, an authenticated user, information representing a relationship to an authenticated user, information representing attributes of a destination or user, and the like. The authenticated user is a user who has performed an authentication when using the image reading device 1 and whose authentication was completed or successful (valid). The authentication can be realized by any method. The information representing a relationship with an authenticated user includes, for example, information indicating a superior (supervisor) of the authenticated user, an administrator of the authenticated user, and the like. The attributes include, for example, information indicating an organization or grouping to which the user belongs. The information specifying the destination may be the destination name or other information indicating the destination. For example, the predetermined character string "TO ME" may be linked to the "authenticated user" for specifying the destination. The information specifying the destination is an example of information representing a destination. The registration information can be appropriately set or updated by the user or the administrator of the image reading device 1.

The storage 13 may store area specifying information for specifying an area on the image where character recognition is performed. The area specifying information is, for example, information in which document information and information such as specified area information are linked. The document information is, for example, information representing a type of the document. The type of the document includes, for example, an email, an invoice, or a circular advertisement. The specified area information represents information related to a specified area. The specified area represents an area (region) in the image of the document where character recognition is performed. The specified area refers to a target area of the document or a target area of the image. The specified area information includes information representing a position and a size of the specified area. The position of the specified area may be specified by coordinates on the document. The size of the specified area may be specified by a height and a width. The size of the specified area may be specified by the coordinates on the document. The specified area may be, for example, a quarter area of the document from the top of the document. The specified area may be an area based on an identified format. For example, the specified area may be the destination section (e.g., a payment address) in an invoice format. The shape of the specified area is, for example, a rectangle, but the shape is not limited thereto. The specified area is an example of a predetermined or preset area. The area specifying information can be appropriately set by the user, the administrator, or the like of the image reading device 1.

The control panel 200 includes a display device 201 and an input device 202.

The display device 201 can display various images under control of the processing circuit 11. The display device 201 can be a liquid crystal display, an organic electro luminescence (EL) display, or the like, but the display device 201 is not limited thereto. The input device 202 can input data or an instruction to the image reading device 1. The input device 202 may include a button, a touch panel, or the like.

The scanner unit 300 is a device that reads images such as characters (text), figures (graphics), and photographs from a sheet placed at a predetermined position. The scanner unit 300 can include a line sensor. The line sensor may be of a charge coupled device (CCD) type. The line sensor may be of a contact image sensor (CIS) type. The scanner unit 300 generates image data based on the images read by the line sensor. The scanner unit 300 transmits the generated image data to the control unit 100. The control unit 100 stores the received image data in the storage 13 and transmits the received image data to the printer unit 700. The scanner unit 300 is an example of a scanner unit.

The automatic document feeding device 310 is a device that conveys a document or the like to a reading position of the scanner unit 300. The automatic document feeding device 310 includes a tray on which the document is placed. The automatic document feeding device 310 conveys the media placed on the tray one by one to the reading position of the scanner unit 300. The automatic document feeding device 310 is also referred to as an automatic document feeder (ADF).

The communication circuit 400 is an interface for communicably connecting the image reading device 1 and the user terminal 2 via a wired or wireless network.

The input/output interface 500 is an interface for connecting the image reading device 1 and an external device. The input/output interface 500 includes a connector for a wired cable.

The power supply circuit 600 converts AC power supplied from a commercial power source into DC power and supplies the power to each unit of the image reading device 1. The power supply circuit 600 can be controlled by the processing circuit 11.

The printer unit 700 is for forming an image on a sheet or the like. In some examples, the sheet can have a plurality of labels arranged along a longitudinal direction. The plurality of labels are generally arranged so that distances between centers of adjacent labels are equal. The printed images can include character information (text) and graphics. The printer unit 700 forms an image on a sheet using the print function based on image data transmitted from the user terminal via the network. The printer unit 700 forms an image on a sheet using the copy function based on image data generated by the scanner unit 300. Here, an example of the printer unit 700 using a tandem type toner image transfer unit is described. The printer unit 700 includes a containing unit 71, a conveying unit 72, an image forming unit 73, and a fixing unit 74. The printer unit 700 is an example of a printing unit.

The containing unit 71 holds a sheet. The containing unit 71 includes a paper feed cassette and a pickup roller. The paper feed cassette contains a sheet. The pickup roller picks up the sheets one by one from the paper feed cassette. The pickup roller supplies the sheets to the conveying unit 72. The sheets may include ID cards with wireless tags.

The conveying unit 72 conveys sheets in the printer unit 700. The conveying unit 72 includes a plurality of rollers and a registration roller. The plurality of rollers include a roller that conveys the sheets supplied by the pickup roller to the registration roller. The plurality of rollers are provided on the downstream side of the fixing unit 74 and discharge the sheet to a paper discharge tray. The registration roller conveys the sheet to a transfer unit of the image forming unit 73 to match a timing at which the transfer unit transfers a toner image to the sheet.

The image forming unit 73 forms the toner image on the sheet. The image forming unit 73 includes an intermediate transfer belt, a plurality of developing units, an exposure unit, a transfer unit, and the like. The intermediate transfer belt is an endless belt (a loop). The number of developing units corresponds to the number of types of the toners. The plurality of developing units include a black developing unit, a cyan developing unit, a magenta developing unit, and a yellow developing unit. Each developing unit includes a photosensitive drum. Each developing unit includes a charger, a developing device, a primary transfer roller, a cleaning unit, and a charge remover near the photosensitive drum. The photosensitive drum is a drum including a photosensitive layer on a surface thereof. The charger uniformly charges the photosensitive layer on the surface of the photosensitive drum. The developing device develops an electrostatic latent image on the surface of the photosensitive drum with the toner. The developing device forms a toner image on the surface of the photosensitive drum. The primary transfer roller faces the photosensitive drum and sandwiches the intermediate transfer belt. The primary transfer roller transfers the toner image from the surface of the photosensitive drum to the intermediate transfer belt. The cleaning unit removes untransferred toner left on the surface of the photosensitive drum. The charge remover irradiates the surface of the photosensitive drum with light. The charge remover removes charge from the photosensitive layer of the photosensitive drum by irradiating light. The exposure device irradiates the surface of the photosensitive drum of each developing unit with laser light via an optical system such as a polygon mirror. The exposure unit forms a static electricity pattern as an electrostatic latent image on the surface of the photosensitive drum. The transfer unit transfers the toner image charged on the surface of the intermediate transfer belt to the sheet. The transfer unit includes a support roller and a secondary transfer roller configured to sandwich the intermediate transfer belt and the sheet from both sides in a thickness direction.

The fixing unit 74 applies heat and pressure to the sheet on which the toner image supplied from the image forming unit 73 is formed. The fixing unit 74 fixes the toner image formed on the sheet to the sheet by heat and pressure.

Note that the hardware configuration of the image reading device 1 is not limited to the above configuration. The components and configuration of the image reading device 1 may be varied and modified. Likewise, some components or configuration may be omitted and/or new components or configuration may be adopted.

Each unit realized by the above processing circuit 11 is described.

The processing circuit 11 realizes an acquisition unit 110, a recognition unit 111, a destination processing unit 112, a display processing unit 113, and a transmission processing unit 114. Each unit realized by the processing circuit 11 can be referred to as each function. Each unit realized by the processing circuit 11 may be realized by a control unit including the processing circuit 11 and the main memory 12.

The acquisition unit 110 acquires the image data of the image of the document read by the scanner unit 300. The acquisition unit 110 acquires image data in the specified area of the document read by the scanner unit 300 based on the area specifying information.

The recognition unit 111 acquires character information from the image data acquired by the acquisition unit 110. The recognition unit 111 performs character recognition, for example, by character recognition processing such as OCR processing from the entire area of the image data. The recognition unit 111 performs character recognition by character recognition processing such as OCR processing on the image data included in the specified area of the image data. The recognition unit 111 stores the character information in the storage 13. The recognition unit 111 may acquire image information from the image data. The recognition unit 111 may acquire image information by image recognition processing from the entire area of the image data. The recognition unit 111 may acquire image information by image recognition processing from the image data included in the specified area of the image data. The recognition unit 111 stores the image information in the storage 13.

The recognition unit 111 refers to the destination information and recognizes the destination name from the character information. The recognition unit 111 extracts a character string corresponding to the destination name based on the destination information. The recognition unit 111 refers to registration information and recognizes the destination item from the image information included in the document. The recognition unit 111 may extract a character string corresponding to a predetermined character string based on the registration information. The recognition unit 111 may extract an image corresponding to a predetermined image based on the registration information. Note that the recognition unit 111 extracts the character string corresponding to at least one destination name.

The destination processing unit 112 refers to the destination information and acquires the information representing the destination based on the extracted destination name. The destination processing unit 112 refers to the registration information and acquires the destination information based on the extracted destination item. The destination processing unit 112 acquires the information specifying the destination based on the destination item. The destination processing unit 112 refers to the destination information and acquires the destination information based on the information specifying the destination. The destination processing unit 112 acquires the destination information linked to at least one destination name extracted by the recognition unit 111.

The display processing unit 113 displays the destination information acquired by the destination processing unit 112 on the display device 201. The display processing unit 113 causes the display device 201 to display a destination display image representing the destination information linked to at least one destination name extracted by the recognition unit 111. The destination display image is, for example, a list image representing the destination name and the information representing the destination. The destination display image includes at least one of the destination name, the destination address linked to the destination name, and the destination folder path.

The display processing unit 113 causes the display device 201 to display a destination input image. The destination input image is an image to which the user can input the destination information. The destination input image includes, for example, a destination information input box. The user inputs the destination address or the destination folder path to the destination information input box via the input device 202. The destination processing unit 112 acquires the destination information input by the user.

The transmission processing unit 114 transmits the image data to the destination represented by the destination information via the communication circuit 400. The transmission processing unit 114 outputs the image data to the user terminal 2 that is the destination via the communication circuit 400.

### (Operation Example)

A procedure of processing by the data transmission system S is described.

Note that, in the following description in which the image reading device 1 is a subject, the image reading device 1 may be read as the processing circuit 11.

The described processing procedure is merely an example and individual steps or processes may be changed as appropriate. Certain steps and processes may be omitted in other embodiments, and changes to described processes and steps may be made. Likewise, additional steps or processing may be incorporated into an embodiment.

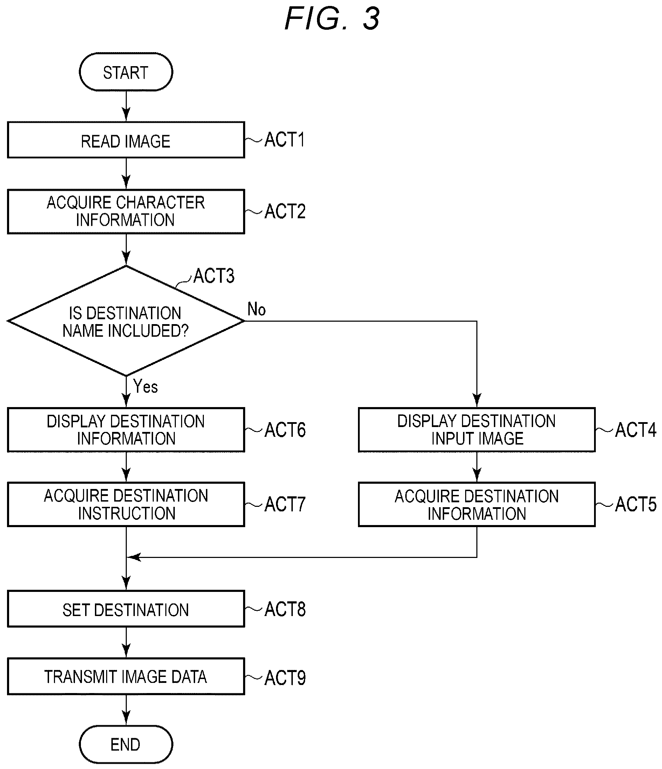

FIG. 3 is a flowchart exemplifying an example of the processing procedure of information processing by the image reading device 1 according to the embodiment.

In the following processing, the user of the image reading device 1 causes the device to read a document. The document is, for example, paper on which an email is printed, a printed invoice, or a circular advertisement. The following processing is started when the document set in the automatic document feeding device 310 is read by the scanner unit 300 by the operation of the image reading device 1 by the user. Note that the document may be read by the scanner unit 300 without using the automatic document feeding device 310.

The scanner unit 300 of the image reading device 1 reads the image of the document.

The processing circuit 11 acquire the image data for the image of the document (ACT1). The processing of ACT1 may be processing by the acquisition unit 110 realized by the processing circuit 11. In one example, the processing circuit 11 acquires the image data over the entire area of the image.

In another example, the processing circuit 11 acquires the image data included in a specified area of the image based on the area specifying information. In the present example, the processing circuit 11 identifies the specified area from the image data of the document. The processing circuit 11 may identify the specified area from the image data of the document based on a specified area set in advance. The processing circuit 11 may refer to the area specifying information stored in the storage 13 and identify the specified area based on the specified area set according to the type of the document. The processing circuit 11 may also or instead identify the specified area based on an operation by the user. For example, the user of the image reading device 1 may specify "Invoice" as the type of the document via the input device 202. The processing circuit 11 may refer to the area specifying information and identify the specified area based on the specification of the type of the document by the user. The processing circuit 11 may then identify the specified area based on the specified area information linked to the "invoice" document type. The processing circuit 11 acquires the image data from the specified area of the document.

The processing circuit 11 acquires the character information from the image data (ACT2). The processing of ACT2 may be processing by the recognition unit 111 realized by the processing circuit 11. In one example, the processing circuit 11 performs character recognition processing on the image data included in the entire image of the document. In another example, the processing circuit 11 performs character recognition processing on the image data only in a specified area of the document.

The processing circuit 11 checks whether a destination name is included in the character information (ACT3). The processing of ACT3 may be processing by the recognition unit 111 realized by the processing circuit 11. In ACT3, for example, the processing circuit 11 acquires the destination information from the storage 13. The processing circuit 11 compares the character information acquired from the image data with the destination name included in the destination information. The processing circuit 11 extracts the character string that matches the destination name included in the destination information from the character information. The character string that matches the destination name is referred to as a character string corresponding to the destination name. The processing circuit 11 determines that the destination name is included in the character information when the character string corresponding to a destination name is included in the character information. Here, the processing circuit 11 recognizes the character string corresponding to the destination name from the character information. The recognition of the character string corresponding to the destination name is referred to as recognition of the destination name. When the character string corresponding to the destination name is not included in the character information, the processing circuit 11 determines that the destination name is not included in the character information.

When the destination name is included in the character information (ACT3: YES), the processing transitions from ACT3 to ACT6. When the destination name is not included in the character information (ACT3: NO), the processing transitions from ACT3 to ACT4.

The processing circuit 11 causes the display device 201 to display the destination input image based on the fact that the destination name was not included in the character information (ACT4). The processing of ACT4 may be processing by the display processing unit 113 realized by the processing circuit 11. In ACT4, the processing circuit 11 causes the display device 201 to display the destination input image including the destination input box. The user inputs the destination information into the destination input box using the input device 202 or the like. The user inputs, for example, a destination address or a destination folder path.

The processing circuit 11 acquires the destination information based on the input operation of the user (ACT5). The processing of ACT5 may be processing by the destination processing unit 112 realized by the processing circuit 11. The processing circuit 11 may acquire the destination information as a destination instruction. Note that the processing circuit 11 may acquire the destination instruction after a confirmation instruction is received to confirm the input destination information or the like. The confirmation instruction is, for example, the operation of an "OK" button included in the destination input image. For example, the "OK" button is an operation element that allows the user to input the confirmation instruction.

The processing circuit 11 causes the display device 201 to display information representing the destination when the destination name is included in the character information (ACT6). The processing of ACT6 may be processing by the display processing unit 113 realized by the processing circuit 11. In ACT6, the processing circuit 11 refers to the destination information and acquires the information representing the destination linked to the destination name recognized from the character information. The processing circuit 11 causes the display device 201 to display the destination display image including the destination name as recognized from the character information along with the information representing the destination linked to the destination name.

The user inputs a destination instruction to specify the destination based on the destination display image. For example, the user selects a check box included in the destination display image. The check box is, for example, an operation element that allows the user to input the destination instruction. The user selects at least one destination.

The processing circuit 11 acquires the destination instruction based on the selection operation of the check box by the user (ACT7). The processing of ACT7 may be processing by the destination processing unit 112 realized by the processing circuit 11. Note that the processing circuit 11 may acquire the destination instruction based on a confirmation instruction to confirm the destination specification included in the destination display image. The confirmation instruction is, for example, an instruction based on the operation of the "OK" button included in the destination display image. For example, the "OK" button is the operation element that allows the user to input the confirmation instruction.

The processing circuit 11 sets the destination for the image data based on the destination instruction (ACT8). The processing of ACT8 may be processing by the destination processing unit 112 realized by the processing circuit 11. In one example, the processing circuit 11 sets the destination for the image data based on the information representing the destination as selected by the user. In another example, the processing circuit 11 sets the destination for the image data based on the destination information as input by the user. The processing circuit 11 sets, for example, at least one of the destination address and the destination folder path as the destination for the image data.

The processing circuit 11 transmits the image data to the destination represented by the destination information (ACT9). The processing of ACT9 may be processing by the transmission processing unit 114 realized by the processing circuit 11. In ACT9, the processing circuit 11 output the image data to the user terminal 2 that is the destination via the communication circuit 400.

According to the present example, the image reading device 1 can recognize a destination name from the image of the document as read by the scanner, acquire the information representing the destination based on the destination name, and transmit the image data of the document to the destination based on the information representing the destination. For example, the image reading device 1 can read the document with the scanner, acquire the character information from the image data, and extract a destination name as set in advance by the user from the character information. The image reading device 1 can set the information representing the destination corresponding to the extracted destination name as the destination and transmit the image data to the destination. Therefore, the user is not required to input the destination to which the image data is to be transmitted by the image reading device 1. The image reading device 1 can automatically set the destination based on the destination information stored in the storage 13. Therefore, the image reading device 1 can facilitate data transmission of image data or the like.

The image reading device 1 can recognize the destination name in the image within a predetermined area of the document. For example, the image reading device 1 can recognize the destination name in the specified area. Therefore, the image reading device 1 can reduce a processing amount by limiting the size of the area in which the destination name can be recognized. The image reading device 1 can shorten the processing time for recognizing the destination name and more efficiently perform the processing.

The image reading device 1 can cause the display device 201 to display the destination information. For example, the image reading device 1 can cause the display device 201 to display the information representing the destination such as the destination name and the destination address or the destination folder path linked to the destination name. Therefore, the user can recognize the information representing the destination. The user can easily select the destination from the information representing the displayed destination. Therefore, the image reading device 1 can facilitate the data transmission of the image data or the like.

### (Example of Document)

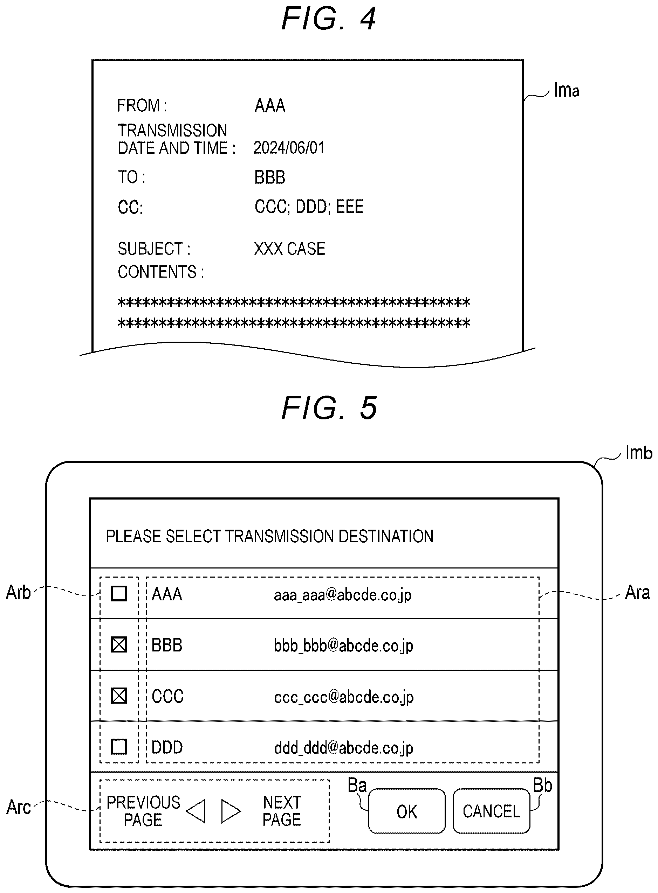

FIG. 4 is a diagram illustrating an example of the document according to the embodiment.

FIG. 4 illustrates a document Ima. The document Ima is paper on which an email has been printed. The document Ima includes character strings corresponding to destination names in a sender field, a destination field, and a CC field.

The processing circuit 11 performs character recognition on the image data of the image over the entire area of the document Ima. The processing circuit 11 acquires the character information and recognizes a character string corresponding to a destination name. For example, the destination names "AAA", "BBB", "CCC", and "DDD" are assumed to be included in the destination information stored in the storage 13. In the present example, the processing circuit 11 recognizes the character strings corresponding to "AAA", "BBB", "CCC", and "DDD" from the character information acquired from the document Ima.

### (Example of Destination Display Image)

FIG. 5 illustrates a destination display image Imb. The destination display image Imb includes a destination area Ara, a check box area Arb, a page browsing area Arc, an OK button Ba, and a cancel button Bb.

The destination display image Imb may include a message that prompts the user to select the destination for the image data. For example, the message may be "Please select sending destination".

The destination area Ara is an area where the destination information is displayed. In the destination area Ara, the destination name recognized by the processing circuit 11 and the information representing the destination linked to the destination name are displayed. The processing circuit 11 acquires the information representing the destination linked to the destination name based on the destination information stored in the storage 13. The processing circuit 11 causes the display device 201 to display the destination name and the information representing the destination to be correlated to each other. Note that the processing circuit 11 may cause the display device 201 to display only the information representing the destination. In the example of FIG. 5, the destination area Ara includes the destination address correlated with the destination names "AAA", "BBB", "CCC", and "DDD".

The check box area Arb includes a check box for selecting the destination. The user can select the destination to which the image data is transmitted by selecting a check box. The user may select a plurality of check boxes. The processing circuit 11 may acquire a destination instruction to select a plurality of destinations.

The page browsing area Arc includes a page browsing button that can input an instruction to display additional destination information not currently being displayed on the display device 201. The page browsing button includes a "Previous page" button and a "Next page" button.

The OK button Ba is an operation element that allows the user to input a confirmation instruction. The user can confirm a destination selection by selecting the OK button Ba.

The cancel button Bb is an operation element that allows the user to input a cancel instruction. The user can cancel the selected destination by selecting the cancel button Bb.

In the present example, the user of the image reading device 1 can easily select a destination based on the displayed destination display image. For example, when a plurality of destination names are extracted by the processing circuit 11, the user can select a desired destination from the plurality of destination names. Therefore, the image reading device 1 can facilitate the data transmission of the image data or the like.

### (Another Example of Document)

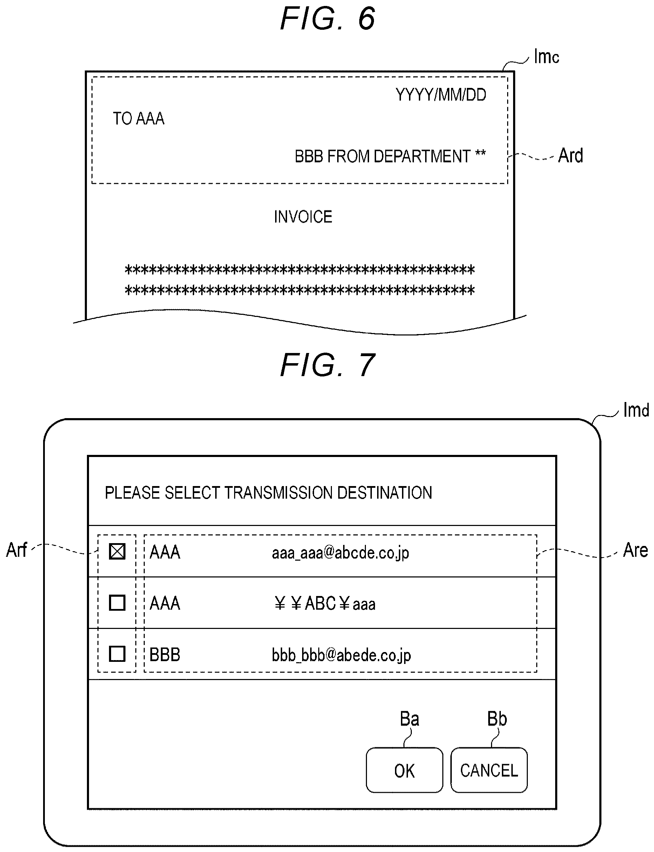

FIG. 6 is a diagram illustrating another example of a document of the embodiment.

FIG. 6 is a document Imc. The document Imc is an invoice. The invoice has been printed on a paper medium or the like. The document Imc includes a sender name and a recipient name. The sender name and the recipient name include character strings corresponding to the destination names. The document Imc includes a specified area Ard. The specified area Ard is an area including the character string corresponding to the destination name. For example, since the invoice typically includes the sender name and the recipient name on an upper portion of the document, the specified area Ard is the area on the upper portion of the document. The specified area Ard is, for example, set based on the area specifying information stored in the storage 13.

The processing circuit 11 performs the character recognition by the character recognition processing on the image data in the specified area Ard of the image on the document Imc. The processing circuit 11 acquires the character information in the specified area Ard and recognizes the character string corresponding to the destination name from the character information. For example, the destination names "AAA" and "BBB" are assumed to be included in the destination information stored in the storage 13. In the example, the processing circuit 11 recognizes the character strings corresponding to "AAA" and "BBB" from the character information acquired from the image data of the image in the specified area Ard of the document Imc.

### (Another Example of Destination Display Image)

FIG. 7 is a diagram illustrating another example of the destination display image displayed on the image reading device 1 according to the embodiment.

FIG. 7 illustrates a destination display image Imd. The destination display image Imd includes a destination area Are, a check box area Arf, the OK button Ba, and the cancel button Bb.

The destination display image Imd may include a message that prompts the user to select a destination similar to the destination display image Imb.

The destination area Are is an area for displaying the destination information in a manner similar to the destination area Ara. The destination area Are displays a destination name as recognized by the processing circuit 11 and the information representing the destination linked to the destination name. In the example of FIG. 7, the destination area Are includes the destination addresses and the destination folder paths correlated with the destination names "AAA" and "BBB".

Similarly to the check box area Arb, the check box area Arf includes a check box to which a destination instruction to select the destination can be input. The user may select a plurality of check boxes. For example, the user may select the destination address and the destination folder path associated with the same destination name. The processing circuit 11 may acquire the destination instruction to select a plurality of destinations.

The OK button Ba and the cancel button Bb are the same as those in the destination display image Imb.

In the present example, the image reading device 1 can recognize the character string corresponding to the destination name in the image data from a specified area in the image of the document. Therefore, the image reading device 1 can perform the character recognition processing only on the image data from the specified area. Therefore, the image reading device 1 can reduce the amount of processing for the character recognition processing. The image reading device 1 can display a destination display image including information representing a plurality of destinations. The user of the image reading device 1 can easily select a destination based on the displayed destination display image. For example, when the information representing a plurality of destinations linked to a destination name by the processing circuit 11 is acquired, the user can select the desired destination from the information representing the plurality of destinations. For example, the user can select a destination address or a destination folder path linked to the destination name. Therefore, the image reading device 1 can improve convenience of the data transmission of the image data or the like.

### (Modification)

In an example, the processing circuit 11 recognizes a destination item included in the image of the document and acquires the destination information linked to the destination item. The processing circuit 11 acquires the destination information based on the registration information stored in the storage 13. The user of the image reading device 1 can insert a predetermined character string or a predetermined image in a margin region of the document before scanning the document. The user may insert, for example, the predetermined character string by handwriting.

### (Operation Example)

A procedure of the processing by the data transmission system S is described.

The described processing procedure is merely an example and individual steps or processes may be changed as appropriate. Certain steps and processes may be omitted in other embodiments, and changes to described processes and steps may be made. Likewise, additional steps or processing may be incorporated into an embodiment.

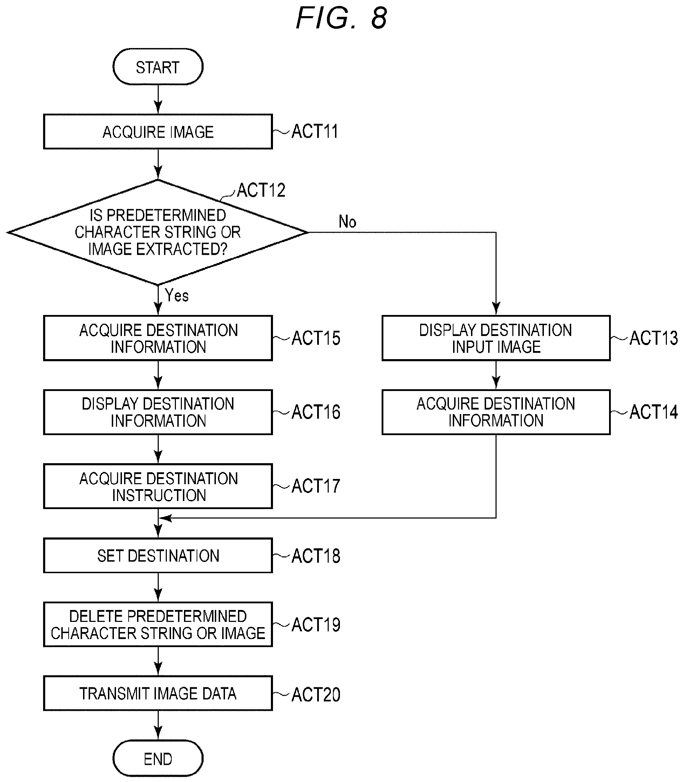

FIG. 8 is a flowchart illustrating an example of a modification of the processing procedure of the information processing by the image reading device 1 according to the embodiment.

In the following processing, the user of the image reading device 1 scans a document. The document is, for example, a paper on which an email is printed, an invoice, or a circular advertisement document. Before reading the document, the user inserts the predetermined character string by handwriting in the margin of the document. Note that the method of inserting the destination item in the present embodiment is not limited to handwriting, and the user may perform any method. The following processing is started by the user of the image reading device 1 causing the scanner unit 300 to read (scab( the document set in the automatic document feeding device 310. Note that the document may be read by the scanner unit 300 without using the automatic document feeding device 310.

The scanner unit 300 of the image reading device 1 acquires the image of the document.

Similarly to ACT1, the processing circuit 11 acquires the image data for the image of the document (ACT11). The processing of ACT11 may be processing by the acquisition unit 110 realized by the processing circuit 11. The processing circuit 11 acquires the image data included in the entire area of the document. Note that the processing circuit 11 may acquire the image data included in just the specified area of the document based on the area specifying information.

The processing circuit 11 determines whether the destination item is included in the image data (ACT12). The processing of ACT2 may be processing by the recognition unit 111 realized by the processing circuit 11.

In one example, the processing circuit 11 performs the character recognition processing on all the image data. The processing circuit 11 determines, from the character information, whether a predetermined character string that is the destination item is included. The processing circuit 11 then acquires the registration information from the storage 13. The processing circuit 11 compares the character information acquired from the image data with the predetermined character string(s) included in the registration information. The processing circuit 11 extracts the character string matching the predetermined character string included in the registration information from the character information. The character string matching the predetermined character string is referred to as a character string corresponding to a destination item. When the character string corresponding to a destination item is included in the image data, the processing circuit 11 determines that a destination item is included in the image data. When a character string corresponding to the destination item is not included in the character information, the processing circuit 11 determines that the destination item is not included in the image data.

In another example, the processing circuit 11 performs the image recognition processing on the image data. The processing circuit 11 checks whether a predetermined image that is the destination item is included in the image data. The processing circuit 11 acquires the registration information from the storage 13. The processing circuit 11 compares the image data with the predetermined image(s) included in the registration information. The processing circuit 11 extracts an image matching the predetermined image included in the registration information. The image matching the predetermined image is referred to as an image corresponding to a destination item. When the image corresponding to a destination item is included in the image data, the processing circuit 11 determines that a destination item is included in the image data. When an image corresponding to a destination item is not included in the image data, the processing circuit 11 determines that a destination item is not included in the image data.

When the destination item is included in the image data (ACT12: YES), the processing transitions from ACT12 to ACT15. When the destination item is not included in the image data (ACT12: NO), the processing transitions from ACT12 to ACT13.

Similarly to ACT4, the processing circuit 11 causes the display device 201 to display the destination input image based on the fact that the destination item is not included in the image data (ACT13). The processing of ACT13 may be processing by the display processing unit 113 realized by the processing circuit 11. The user inputs the destination information to the destination input box via the input device 202.

Similarly to ACT5, the processing circuit 11 acquires the destination information based on the input operation of the user (ACT14). The processing of ACT14 may be processing by the destination processing unit 112 realized by the processing circuit 11. The processing circuit 11 may acquire the destination information as the destination instruction. Note that the processing circuit 11 may acquire the destination instruction based on the confirmation instruction to confirm the destination information. The confirmation instruction is, for example, an instruction based on the operation of the "OK" button included in the destination input image. For example, the "OK" button is an operation element that allows the user to input the confirmation instruction.

The processing circuit 11 acquires the destination information based on the fact that the destination item is included in the image data (ACT15). The processing of ACT15 may be processing by the destination processing unit 112 realized by the processing circuit 11. In ACT15, the processing circuit 11 acquires the information representing the destination based on the destination item. Specifically, the processing circuit 11 recognizes a destination item from the image data. The processing circuit 11 acquires the information specifying the destination linked to the destination item based on the registration information. The processing circuit 11 acquires the information representing the destination based on the information specifying the destination. The processing circuit 11 identifies the destination name based on the information specifying the destination. For example, the processing circuit 11 refers to the destination information stored in the storage 13 and acquires the destination name based on the information specifying the destination. The processing circuit 11 refers to the destination information and acquires the information representing the destination based on the destination name. For example, when the destination item is "TO ME" and the processing circuit 11 recognizes the destination item "TO ME" from the image data, the processing circuit 11 acquires the information specifying the destination that is linked to the destination item "TO ME" in the registration information. In this example, the processing circuit 11 acquires "authenticated user" as the information specifying the destination. The processing circuit 11 then acquires information that identifies the authenticated user. The processing circuit 11 may acquire, for example, information representing the authenticated user acquired in an authentication processing. For example, the processing circuit 11 acquires the user name "AAA" of an authenticated user. The processing circuit 11 refers to the destination information and acquires "AAA" as the destination name. The processing circuit 11 acquires the information representing the destination as linked to the user name (destination name) "AAA". The processing circuit 11 acquires at least one of the destination address and the destination folder path linked to the destination name "AAA" as the information representing the destination.

Similarly to ACT6, the processing circuit 11 causes the display device 201 to display the information representing the destination (ACT16). The processing of ACT16 may be processing by the display processing unit 113 realized by the processing circuit 11. In ACT16, the processing circuit 11 causes the display device 201 to display the destination display image including the destination name and the information representing the destination linked to the destination name.

The user inputs the destination instruction to specify a destination using the destination display image. For example, the user selects a check box included in the destination display image. The user selects the information representing at least one destination.

Similarly to ACT7, the processing circuit 11 acquires the destination instruction based on the selection operation of the check box by the user (ACT 17). The processing of ACT17 may be processing by the destination processing unit 112 realized by the processing circuit 11. Note that the processing circuit 11 may acquire the destination instruction based on the confirmation instruction to confirm the destination specification included in the destination display image.

Similarly to ACT8, the processing circuit 11 sets the destination for the image data based on the destination instruction (ACT18). The processing of ACT18 may be processing by the destination processing unit 112 realized by the processing circuit 11. In one example, the processing circuit 11 sets the destination for the image data based on the information representing the destination selected by the user. In another example, the processing circuit 11 sets the destination for the image data based on the destination information input by the user. The processing circuit 11 sets, for example, at least one of the destination address and the destination folder path as the destination for the image data.

The processing circuit 11 deletes the destination item from the image data (ACT19). The processing of ACT 19 may be processing by the transmission processing unit 114 realized by the processing circuit 11. Note that the processing circuit 11 deletes the destination item recognized from the image data. The processing for deleting the destination item can be realized by any method.

Similarly to ACT9, the processing circuit 11 transmits the image data to the destination represented by the destination information (ACT20). The processing of ACT20 may be processing by the transmission processing unit 114 realized by the processing circuit 11. In ACT20, for example, the processing circuit 11 outputs the image data from which the destination item is deleted to the user terminal 2 that is the destination via the communication circuit 400.

In the example, the image reading device 1 can recognize the predetermined character string or the predetermined image included in the document that has been read by the scanner and acquire the information representing the destination based on the predetermined character string or the predetermined image. For example, the image reading device 1 can read the document by the scanner, acquire the character information from the image data of the document, and extract the predetermined character string set in advance by the user from the character information. The image reading device 1 can acquire the information specifying the destination corresponding to the extracted predetermined character string and identify the destination based on the information specifying the destination. Therefore, the user can easily set the destination for transmitting the image data by inserting the predetermined character string in the document. For example, when a predetermined character string "TO ME" is linked to the "authenticated user", the user can transmit the image data to himself when he is the currently authenticated user by inserting "TO ME" in the document. The image reading device 1 can set a different destination based on the information specifying the destination, even when the same character string "TO ME" is used. For example, even when the same character string "TO ME" is recognized, if the authenticated user has changed, the image reading device 1 can set the destination to that of the current authenticated user. Therefore, the image reading device 1 can set different destinations without having to recognize each user name separately. Therefore, the image reading device 1 can facilitate the destination setting of the image data or the like and facilitate the data transmission. The image reading device 1 can improve convenience of the data transmission.

### (Example of Document in Modification)

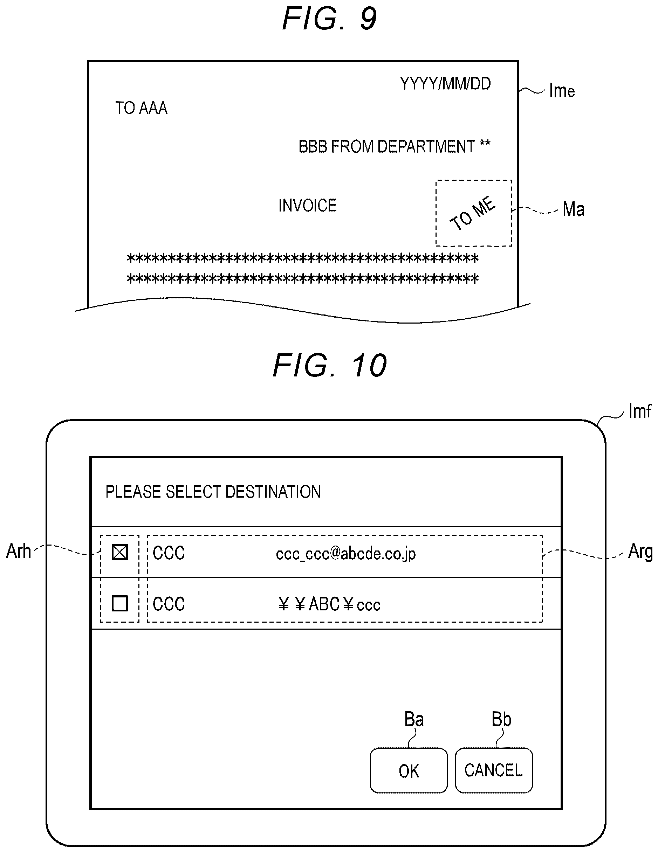

FIG. 9 is a diagram illustrating an example of the document according to the modification of the embodiment.

FIG. 9 illustrates a document Ime. The document Ime illustrates an invoice that is similar to the document Imc. The document Ime includes a destination item area Ma. The destination item area Ma includes the destination item. The destination item area Ma illustrates, for example, the predetermined character string or the predetermined image. The destination item is, for example, a destination item included in the registration information stored in the storage 13.

The processing circuit 11 recognizes the destination item in the destination item area Ma. The destination item "TO ME" is assumed to be included in the registration information stored in the storage 13. In the example, the processing circuit 11 recognizes the character string corresponding to the destination item "TO ME" acquired from the image data of the image of the document Imc.

### (Example of Destination Display Image in Modification)

FIG. 10 is a diagram illustrating an example of a destination display image displayed on the image reading device 1 according to the modification of the embodiment.

FIG. 10 illustrates a destination display image Imf. The destination display image Imf includes a destination area Arg, a check box area Arh, the OK button Ba, and the cancel button Bb.

Similarly to the destination display image Imd, the destination display image Imf may include a message that prompts the user to select the destination for the image data.

Similarly to the destination area Ara, the destination area Arg is an area where the destination information is displayed. The destination area Arg displays the destination name recognized by the processing circuit 11 and the information representing the destination linked to the destination name. In the example of FIG. 10, the destination area Arg includes "CCC," who is the "authenticated user" linked to the destination item "TO ME" as the destination name. The destination area Arg includes the destination address and the destination folder path correlated to the destination name "CCC".

Similarly to the check box area Arb, the check box area Arh includes a check box to which the destination instruction to select the destination can be input. The user may select a plurality of check boxes. For example, the user may select the destination address and the destination folder path for one destination name. The processing circuit 11 may acquire the destination instruction to select the plurality of destinations.

The OK button Ba and the cancel button Bb are the same as those in the destination display image Imb.

According to an example, the user of the image reading device 1 can easily select the destination based on the displayed destination display image. For example, when the information representing the plurality of destinations is acquired as the destination of the "authenticated user" linked to the predetermined character string "TO ME", the user can select the desired destination from the information representing a plurality of destinations. For example, the user can select at least one of a destination address and a destination folder path that are listed or known destinations for the user. Therefore, the image reading device 1 can improve convenience of the data transmission of the image data or the like.

### (Other Embodiments)

The image reading device may be realized as a single electronic device such as the image reading device 1 or may be realized by a plurality of electronic devices among which functions are distributed acting in concert.

The printer unit 700 is described as a printer unit using a tandem type toner image transfer unit, but the printer unit 700 is not limited thereto. The printer unit 700 may be an inkjet type printer unit.

The above-mentioned embodiments may be applied to a method performed by a device. An embodiment may be applied to a program capable of causing a computer or a device to perform each described function. An embodiment may be a recording medium that stores such a program.

Each of one or more circuits configuring the processing circuit executes one or more processing among a plurality of processing. When the processing circuit is configured of a single circuit, the single circuit performs all of the plurality of processing. When the processing circuit is configured of a plurality of circuits, each of the plurality of circuits performs a part of the plurality of processing. The part of the plurality of processing may be one of the plurality of processing, or may be two or more of the plurality of processing. When the processing circuit is configured of a plurality of circuits, the plurality of circuits may be included in one device or may be distributed to a plurality of devices.

A program may be transferred stored in an device according to the embodiment or may be transferred separately. In the latter case, the program may be transferred via a network or recorded in a recording medium. The recording medium is a non-transitory tangible medium. The recording medium is a computer-readable medium. As long as the recording medium is a medium capable of storing a program and is readable by a computer, such as a CD-ROM or a memory card, the format of the recording medium is not important.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. An image reading device, comprising:
a scanner unit configured to provide an image of a document; and
a control unit configured to:
recognize name information in the image provided by the scanner unit;
acquire information indicating a destination for the image associated with the recognized name information; and
transmit the image to the destination based on the information indicating the destination.

2. The image reading device according to claim 1, wherein the control unit is configured to recognize the name information in the image only in a preset area of the document.

3. The image reading device according to claim 1 or 2, wherein the control unit is further configured to:
cause a display screen to display the acquired information indicating the destination.

4. The image reading device according to claim 3, further comprising:
a control panel, wherein
the display screen is part of the control panel.

5. The image reading device according to any one of claims 1 to 4, wherein the control unit is further configured to:
recognize a predetermined character string on the document and acquire the information indicating the destination for the image based on the recognized predetermined character string.

6. The image reading device according to any one of claims 1 to 5, wherein the control unit is further configured to:
recognize a predetermined image on the document and acquire the information indicating the destination for the image based on the recognized predetermined image.

7. The image reading device according to any one of claims 1 to 6, wherein the destination is an email address.

8. The image reading device according to any one of claims 1 to 7, wherein the destination is a file folder on a networked storage device.

9. The image reading device according to any one of claims 1 to 8 wherein the image reading device is a multifunctional peripheral device, and further comprises:
a printer unit configured to print documents.

10. A method for reading an image with an image reading device comprising a scanner unit, the method comprising:
providing an image of a document from a scanner unit; and
controlling a processor to:
recognize name information in the image provided from the scanner unit;
acquire information indicating a destination for the image associated with the recognized name information; and
transmit the image to the destination based on the information indicating the destination.

11. The method according to claim 10, wherein the processor is further controlled to:
cause a display screen to display the acquired information indicating the destination.

12. The method according to claim 10 or 11, further comprising:
controlling the processor to recognize a predetermined character string or a predetermined image on the document and acquire the information indicating the destination for the image based on the recognized predetermined character string or predetermined image.

13. The method according to claim 12, wherein the predetermined image is handwritten text in a margin of the document.
